# EUROPÄISCHE PATENTANMELDUNG

(11) **EP 4 410 652 A1**
(43) Veröffentlichungstag der Anmeldung: **07.08.2024**
(21) Anmeldenummer: 24152069.1
(22) Anmeldetag: 16.01.2024
(51) Int. Cl.: B62M 6/45, B62M 9/122, B62M 9/132

(54) **VERFAHREN ZUM BETREIBEN EINES ANTRIEBSSYSTEMS EINES ELEKTROFAHRRADS**

(30) Priorität: 02.02.2023 DE 102023200855
(71) Anmelder: Robert Bosch GmbH, 70442 Stuttgart (DE)
(72) Erfinder: Fleischer, Claus, 70569 Stuttgart-Vaihingen (DE); Baumgaertner, Daniel, 72149 Neustetten (DE)

(57) **Zusammenfassung**

Die Erfindung betrifft ein Verfahren zum Betreiben eines Antriebssystems (10) eines Elektrofahrrads (100), umfassend die Schritte: Erhöhen eines mittels eines Motors (102) des Elektrofahrrads (100) erzeugten Motormoments (5) für eine vorbestimmte erste Zeitspanne (1), Reduzieren des Motormoments (5) unmittelbar nach der ersten Zeitspanne (1) für eine vorbestimmte zweite Zeitspanne (2), und Verändern einer Übersetzung eines Schaltsystems (10) des Antriebssystems (10) während der zweiten Zeitspanne (2).

## Beschreibung

### Stand der Technik

Die vorliegende Erfindung betrifft ein Verfahren zum Betreiben eines Antriebssystems eines Elektrofahrrads, und ein Elektrofahrrad.

Bekannt sind Antriebssystem mit Schaltsystemen für Fahrräder, welche eine Kettenschaltung aufweisen. Dabei erfolgt eine Änderung einer Übersetzung im Antriebssystem dadurch, dass eine Kette des Fahrrads zwischen verschieden großen Ritzeln bewegt wird. Üblicherweise ist ein Schalten unter Last dabei konstruktionsbedingt schwer oder gar nicht möglich oder führt zu erhöhtem Verschleiß. Bekannt sind auch automatische Schaltungen, bei denen beispielsweise der Schaltvorgang bei geeigneten Fahrerdrehmomenten oder bei bestimmten Kurbellagen initiiert wird.

### Offenbarung der Erfindung

Das erfindungsgemäße Verfahren mit den Merkmalen des Anspruchs 1 bietet demgegenüber den Vorteil, dass jederzeit und mit niedrigem Verschleiß geschaltet werden kann. Insbesondere wird dabei ein Schalten bei Elektrofahrrädern derart ermöglicht, dass kein oder nur ein geringer Geschwindigkeitsverlust während des Schaltvorgangs auftritt. Dies wird erfindungsgemäß erreicht durch ein Verfahren zum Betreiben eines Antriebssystems eines Elektrofahrrads, umfassend die Schritte:
- Erhöhen eines Motormoments, welches mittels eines Motors des Elektrofahrrads erzeugt wird, für die Dauer einer vorbestimmten ersten Zeitspanne,
- Reduzieren des Motormoments unmittelbar nach der ersten Zeitspanne für die Dauer einer vorbestimmten zweiten Zeitspanne, und
- Verändern einer Übersetzung eines Schaltsystems des Antriebssystems während der zweiten Zeitspanne.

Insbesondere erfolgt das Erhöhen des Motormoments und das Reduzieren des Motormoments dabei gezielt aktiv gesteuert.

Das Verändern der Übersetzung kann insbesondere als Schaltvorgang bzw. als "Schalten" angesehen werden.

Mit anderen Worten wird bei dem Verfahren das Schalten während einer aktiven Reduktion des von dem Motor erzeugten Motormoments durchgeführt. Diese Reduktion findet dabei unmittelbar nach einer vorherigen, insbesondere kurzzeitigen, aktiven Erhöhung des Motormoments statt. Durch das Erhöhen des Motormoments wird erreicht, dass ein Fahrer des Elektrofahrrads kurzzeitig den Zug zur Kette verliert und dadurch das Fahrerdrehmoment, welches auf das Schaltsystem wirkt, reduziert wird. Durch die unmittelbar anschließende Reduktion des Motormoments wird erzielt, dass während der zweiten Zeitspanne das Gesamtdrehmoment, welches eine Summe des Motormoments und des Fahrerdrehmoments ist, reduziert ist und dadurch das Verändern der Übersetzung, das heißt das Schalten, bei besonders niedrigem Gesamtdrehmoment, das auf das Schaltsystem wirkt, umgesetzt werden kann. Dadurch kann ein optimaler, insbesondere schneller und verschleißfreier, Schaltvorgang ermöglicht werden. Zudem wird durch die vorherige Erhöhung des Motormoments bewirkt, dass kein oder nur ein geringer Geschwindigkeitsverlust durch den gesamten Schaltvorgang auftritt.

Die Unteransprüche haben bevorzugte Weiterbildungen der Erfindung zum Inhalt.

Bevorzugt erfolgt das Erhöhen des Motormoments derart, dass das Motormoment ausgehend von einem ersten Motormoment auf ein Boost-Motormoment erhöht wird. Das Boost-Motormoment entspricht dabei mindestens 120 %, bevorzugt mindestens 140 %, besonders bevorzugt maximal 500 %, des ersten Motormoments. Insbesondere entspricht das erste Motormoment dabei einem Motormoment, welches in einem Normal-Fahrbetrieb des Elektrofahrrads basierend auf einer Tretkraft bzw. einem Fahrerdrehmoment des Fahrers erzeugt wird. Dadurch wird sichergestellt, dass das mittels des Motors bereitgestellte Boost-Motormoment kurz vor dem Schaltvorgang signifikant erhöht wird, sodass sich der Effekt, dass der Fahrer kurzzeitig den Zug an der Kette verliert, und damit das Gesamt-Moment während der zweiten Zeitspanne möglichst niedrig oder gleich Null ist, besonders zuverlässig einstellt.

Besonders bevorzugt erfolgt das Reduzieren des Motormoments derart, dass das Motormoment auf ein Schalt-Motormoment reduziert wird. Das Schalt-Motormoment ist dabei kleiner als das erste Motormoment, welches vor der ersten Zeitspanne erzeugt wird. Das heißt, während der zweiten Zeitspanne wird das Motormoment aktiv gesteuert so weit reduziert, dass das Schalt-Motormoment, das während der zweiten Zeitspanne erzeugt wird, kleiner ist als das Motormoment, welches vor dem Erhöhen der ersten Zeitspanne vorliegt. Dadurch wird besonders zuverlässig sichergestellt, dass während des Schaltvorgangs ein niedriges Motormoment und insbesondere auch ein niedriges Gesamtmoment am Schaltsystem vorliegt.

Insbesondere ist das Schalt-Motormoment gleich Null. Alternativ bevorzugt beträgt das Schalt-Motormoment maximal 20 %, vorzugsweise maximal 10 %, des ersten Motormoments, oder alternativ eines Maximal-Motormoments. Als Maximal-Motormoment wird insbesondere ein in einem Normal-Betriebsmodus maximal bereitstellbares Motormoment des Motors angesehen. Das heißt, das Schalt-Motormoment wird auf einen besonders niedrigen Wert reduziert, um besonders zuverlässig, verschleißarm und zeiteffizient den Schaltvorgang ermöglichen zu können.

Weiter bevorzugt umfasst das Verfahren ferner den Schritt: zweites Erhöhen des Motormoments, insbesondere unmittelbar, nach der zweiten Zeitspanne. Das heißt, nach Ablauf der zweiten Zeitspanne wird das Motormoment ausgehend vom Schalt-Motormoment wieder erhöht. Dadurch wird ermöglicht, dass unmittelbar nach dem Schaltvorgang der Fahrer des Fahrrads wieder Zug auf die Kette bringen kann und zudem der Motor wieder antreibt, sodass eine möglichst geringe bzw. kurzzeitige Unterbrechung des Vortriebs des Elektrofahrrads sichergestellt wird.

Bevorzugt erfolgt das zweite Erhöhen des Motormoments für eine vorbestimmte dritte Zeitspanne. Dabei wird das Motormoment auf einen Wert erhöht, der größer als das erste Motormoment vor der ersten Zeitspanne ist. Insbesondere erfolgt somit nach dem Schaltvorgang ein zweites Boosten. Vorzugsweise wird das Motormoment in der dritten Zeitspanne auf das Boost-Motormoment erhöht. Dadurch kann der Vortrieb des Fahrrads besonders zuverlässig ohne signifikante Unterbrechungen ermöglicht werden.

Vorzugsweise wird die erste Zeitspanne in Abhängigkeit von ermittelten Fahrparametern und/oder Umgebungsparametern angepasst. Das heißt, je nach aktuellen Fahrparametern und/oder Umgebungsparametern kann adaptiv eine Verlängerung oder Verkürzung der ersten Zeitspanne erfolgen. Dadurch kann die Wirkung des Boost besonders effektiv erreicht werden.

Bevorzugt wird das Erhöhen des Motormoments während der ersten Zeitspanne in Abhängigkeit von ermittelten Fahrparametern und/oder Umgebungsparametern angepasst. Das heißt, je nach aktuellen Fahrparametern und/oder Umgebungsparametern kann adaptiv eine Erhöhung oder Verringerung des Boost-Motormoments oder eine Anpassung eines Gradienten der Erhöhung des Motormoments innerhalbe der ersten Zeitspanne erfolgen. Dadurch kann der Effekt des Boost situationsbedingt besonders zuverlässig erreicht werden.

Besonders bevorzugt umfassen die Fahrparameter und/oder Umgebungsparameter mindestens einen der folgenden Parameter: momentane Steigung, momentane Beschleunigung, momentanes oder bevorstehendes Fahrerdrehmoment, momentane Trittfrequenz, Fahrbahneigenschaften, Fahrbahnverlauf, Navigationsdaten. Insbesondere können die Parameter mittels Sensoren erfasst werden. Beispielsweise kann auch eine Abschätzung, beispielsweise des bevorstehenden Fahrerdrehmoments, beispielsweise durch Interpolation des momentanen Fahrerdrehmoments, mittels einer Steuereinheit erfolgen. Als Fahrbahneigenschaft kann beispielsweise ermittelt werden, ob das Elektrofahrrad sich momentan auf einer Straße oder im Gelände fortbewegt. Als Fahrbahnverlauf können insbesondere Kurven berücksichtigt werden. Damit kann die Wirkung des Boost besonders effektiv und zuverlässig in Abhängigkeit des momentanen Fahrbetriebs ausgestaltet werden.

Weiter bevorzugt umfasst das Verfahren ferner den Schritt: Ausgeben eines akustischen und/oder optischen Hinweises über das bevorstehende Erhöhen des Motormoments, vorzugsweise mittels einer Ausgabevorrichtung des Elektrofahrrads. Das heißt, der Fahrer des Elektrofahrrads kann davor gewarnt werden, dass in Kürze ein Schaltvorgang durchgeführt wird, bei dem der Boost eingesetzt wird. Dadurch kann für den Fahrer ein hoher Fahrkomfort ermöglicht werden.

Bevorzugt wird das Verfahren ausschließlich während einer Pedalbetätigung durch einen Fahrer des Elektrofahrrads durchgeführt. Das heißt, nur wenn der Fahrer mittels Muskelkraft ein Fahrerdrehmoment erzeugt, wird das Schalten mittels Boost und die an den Boost anschließende Reduktion des Motormoments durchgeführt.

Besonders bevorzugt wird das Verändern der Übersetzung des Schaltsystems mittels eines steuerbar betätigbaren Aktuators durchgeführt. Insbesondere kann als Aktuator ein Elektromotor angesehen werden. Vorzugsweise handelt es sich somit um eine elektronische Schaltung. Damit kann ein besonders hoher Nutzerkomfort und eine einfache und flexible Durchführung des Verfahrens ermöglicht werden. Insbesondere können das Schalten und das Erhöhen oder Reduzieren des Motormoments präzise aufeinander abgestimmt werden.

Weiter bevorzugt wird der Aktuator automatisch mittels einer Steuereinheit betätigt. Insbesondere erfolgt das Schalten somit vollautomatisch, insbesondere ausschließlich, durch die Steuereinheit initiiert. Alternativ oder zusätzlich wird der Aktuator im Ansprechen auf ein manuell erzeugbares Schaltsignal betätigt. Das Schaltsignal kann beispielsweise mittels einer Eingabevorrichtung, z.B. durch Knopfdruck, durch einen Fahrer des Elektrofahrrads erzeugt werden. Mittels des Schaltsignals kann beispielsweise der Aktuator unmittelbar betätigt werden, oder alternativ indirekt über die Steuereinheit. Beispielsweise kann als Schaltsignal ein Befehl zum Hochschalten oder Herunterschalten erzeugt werden. Dadurch kann für den Fahrer des Elektrofahrrads eine besonders einfache und komfortable Bedienung und ein komfortabler Fahrbetrieb bereitgestellt werden.

Vorzugsweise umfasst das Verfahren ferner die Schritte: Aufzeichnen und Vergleichen von Schaltdauern des Schaltsystems, insbesondere während der zweiten Zeitspanne, und Ermitteln einer Funktionsfähigkeit des Schaltsystems basierend auf dem Vergleich der Schaltdauern. Insbesondere wird als Funktionsfähigkeit ein Verschleiß und/oder ein Schalteinstellung ermittelt oder überprüft. Vorzugsweise wird als Schaltdauer eine Dauer angesehen, die zum Wechseln der Übersetzung notwendig ist. Durch erhöhten Verschleiß oder beispielsweise falsche oder ungünstige Einstellung des Schaltwerks erhöht sich diese Schaltdauer dabei mit der Lebensdauer. Anhand der Aufzeichnung kann dabei ermittelt werden, dass ein erhöhter Verschleiß, oder beispielsweise eine Fehlfunktion vorliegt. Basierend darauf kann beispielsweise die Notwendigkeit einer Wartung ermittelt werden.

Weiterhin führt die Erfindung zu einem Elektrofahrrad, umfassend ein Antriebssystem mit einem Schaltsystem, einen Motor, und eine Steuereinheit. Die Steuereinheit ist eingerichtet, um das Schaltsystem zu betätigen. Ferner ist die Steuereinheit eingerichtet, das beschriebene Verfahren durchzuführen.

Bevorzugt ist der Motor eingerichtet, um in einem Normal-Fahrbetrieb ein vorbestimmtes Maximal-Motormoment zu erzeugen. Als Maximal-Motormoment wird insbesondere das maximal zur Unterstützung der Tretkraft des Fahrers verfügbare Motormoment angesehen. Das erhöhte Boost-Motormoment, welches während der ersten Zeitspanne erzeugt wird, entspricht dabei mindestens 120 %, bevorzugt maximal 150 %, des Maximal-Motormoments. Mit anderen Worten ist der Motor derart ausgebildet, dass stets eine Reserve für das Boost-Motormoment zur Verfügung steht, sodass auch während eines Fahrbetriebs mit maximaler Unterstützung noch die Erhöhung des Motormoments auf das Boost-Motormoment möglich ist. Dadurch kann das optimierte Schalten jederzeit und besonders zuverlässig durchgeführt werden.

### Kurze Beschreibung der Zeichnungen

Im Folgenden wird die Erfindung anhand von Ausführungsbeispielen in Verbindung mit den Figuren beschrieben. In den Figuren sind funktional gleiche Bauteile jeweils mit gleichen Bezugszeichen gekennzeichnet. Dabei zeigt:
- Figur 1: eine vereinfachte schematische Ansicht eines Elektrofahrrads mit einem Schaltsystem, bei dem ein Verfahren gemäß einem bevorzugten Ausführungsbeispiel der Erfindung durchgeführt wird, und
- Figur 2: eine vereinfachte schematische Ansicht von Momentenverläufen bei der Durchführung des Verfahrens des bevorzugten Ausführungsbeispiels.

### Bevorzugte Ausführungsformen der Erfindung

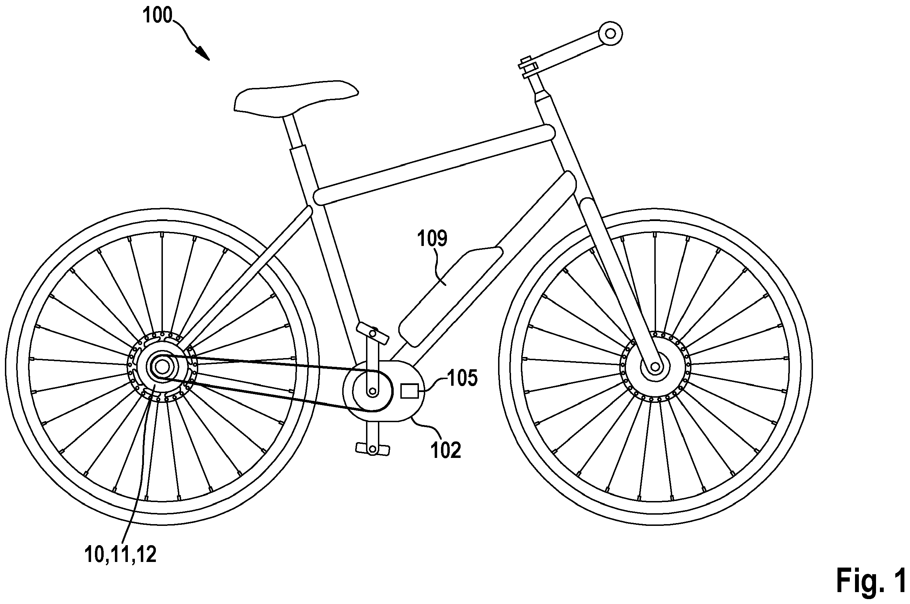

Figur 1 zeigt eine vereinfachte schematische Ansicht eines Elektrofahrrads 100 mit einem Antriebssystem 10. Das Antriebssystem 10 umfasst eine Antriebseinheit im Bereich des Tretlagers, welche einen Motor 102, der insbesondere ein Elektromotor ist, umfasst. Der Motor 102 kann mittels eines elektrischen Energiespeichers 109 des Elektrofahrrads 100 mit elektrischer Energie versorgt werden.

Durch ein mittels des Motors 102 erzeugten Motordrehmoments kann eine durch Muskelkraft erzeugte Tretkraft eines Fahrers des Elektrofahrrads 100 motorisch unterstützt werden.

Das Antriebssystem umfasst zudem ein Schaltsystem 12. Das Schaltsystem 12 ist in der Figur 1 lediglich stark vereinfacht schematisch angedeutet. Insbesondere umfasst das Schaltsystem 12 zumindest eine Schaltung, mittels welcher eine Übersetzung im Antriebssystem 10 des Elektrofahrrads 100 verändert werden kann. Beispielsweise kann die Schaltung als Kettenschaltung an einer Hinterradnabe und/oder an Kettenblättern vorgesehen sein, wobei insbesondere mittels verschieden großer Ritzel verschiedene Übersetzungen bereitgestellt werden können. Alternativ bevorzugt können auch andere Arten an Schaltungen, wie beispielsweise Getriebe oder Nabenschaltungen, vorgesehen sein.

Das Schaltsystem 12 umfasst dabei einen Aktuator 11, der eingerichtet ist, um die Schaltung zu betätigen, das heißt den Gangwechsel, beispielsweise durch Bewegen eines Schaltwerks, zu initiieren. Der Aktuator 11 umfasst insbesondere einen Elektromotor, sodass es sich bei dem Schaltsystem 10 bevorzugt um eine elektronische Schaltung handelt.

Das Elektrofahrrad 100 umfasst zudem eine Steuereinheit 105, welche eingerichtet ist, den Aktuator 11 und den Motor 102 zu betätigen. Die Steuereinheit 105 ist dabei zudem ausgebildet, das Verfahren gemäß dem bevorzugten Ausführungsbeispiel auszuführen.

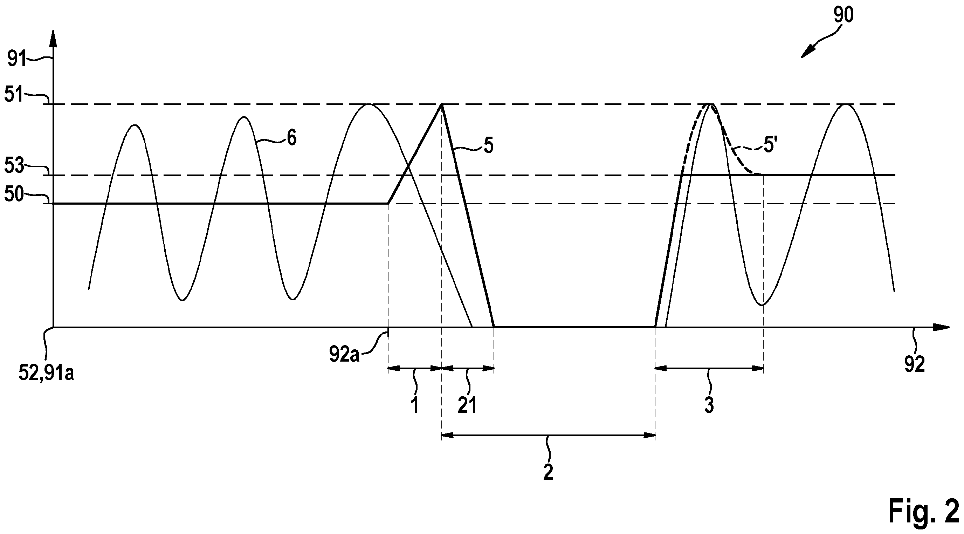

Der Ablauf des Verfahrens wird im nachfolgenden im Detail erläutert, wobei auf die Figur 2 Bezug genommen wird. Figur 2 zeigt ein Diagramm 90 mit Drehmomentverläufen, die während der Durchführung des Verfahrens auftreten. Dabei ist ein Drehmoment 91 über der Zeit 92 dargestellt. Mit dem Bezugszeichen 91a ist ein Drehmoment mit dem Wert Null gekennzeichnet.

Dargestellt ist in der Figur 2 im Detail ein einzelner Schaltvorgang, das heißt eine einmalige Veränderung einer Übersetzung des Schaltsystems 12.

In Figur 2 sind dabei beispielhafte Verläufe für ein Motormoment 5, das vom Motor 102 erzeugt wird, und ein Fahrerdrehmoment 6, das der Fahrer beim Pedalieren mittels Muskelkraft erzeugt, dargestellt. Das an der Kurbelwelle auftretende Fahrerdrehmoment 6 ist dabei wie in der Figur 2 zu erkennen im Wesentlichen periodisch schwankend, beispielsweise sinusförmig.

Das von dem Motor 102 erzeugte Motordrehmoment 5 wird in Abhängigkeit des Fahrerdrehmoments 6, beispielsweise in Abhängigkeit eines Mittelwerts des Fahrerdrehmoments 6, erzeugt.

Zum Zeitpunkt 92a wird ein Schaltsignal erzeugt. Das Schaltsignal kann entweder automatisch mittels der Steuereinheit 105 erzeugt werden, oder alternativ im Ansprechen auf einen manuell durch den Fahrer des Elektrofahrrads 100 erzeugten Schaltwunsch, der beispielsweise mittels einer Eingabeeinheit erzeugt werden kann. Ein automatisches Schalten mittels der Steuereinheit 105 kann beispielsweise durch Überwachung von Fahrparametern, wie insbesondere einer Trittfrequenz, Geschwindigkeit und dergleichen erfolgen.

Bei dem Verfahren wird unmittelbar nach dem Erzeugen des Schaltsignals das Motormoment 5 für eine vorbestimmte erste Zeitspanne 1 erhöht. Während der ersten Zeitspanne 1 wird das Motormoment 5 dabei linear ausgehend von einem ersten Motormoment 50, das vor dem Schaltsignal vorliegt, auf ein Boost-Motormoment 51 erhöht. Das Boost-Motormoment 51 beträgt vorzugsweise mindestens 120 % des ersten Motormoments 50.

Die erste Zeitspanne 1 kann dabei beispielsweise eine vorbestimmte Zeitdauer aufweisen, von beispielsweise mindestens 0,2 Sekunden, vorzugsweise maximal 1 Sekunde, bevorzugt 0,5 Sekunden.

Besonders vorteilhaft ist es, wenn die erste Zeitspanne 1 adaptiv anpassbar ausgebildet ist. Insbesondere kann dabei eine Anpassung an aktuelle Fahrparameter und/oder Umgebungsparameter, wie insbesondere einer momentanen Steigung, einer momentanen Beschleunigung, eines momentanen oder bevorstehenden Fahrerdrehmoments, einer momentanen Trittfrequenz, Fahrbahneigenschaften, einem Fahrbahnverlauf, und/oder Navigationsdaten erfolgen.

Unmittelbar nach der ersten Zeitspanne 1 wird das Motormoment 5 für eine vorbestimmte zweite Zeitspanne 2 reduziert. Dabei wird das Motormoment 5 auf ein vorbestimmtes Schalt-Motormoment 52 reduziert, welches im dargestellten Ausführungsbeispiel den Wert Null aufweist. Bevorzugt wird das Motormoment 5 dabei innerhalb einer Teil-Zeitspanne 21 der zweiten Zeitspanne 2 linear auf den Wert Null reduziert. Während der restlichen Dauer der zweiten Zeitspanne 2 wird das Motormoment 5 bevorzugt auf dem Wert Null gehalten.

Die zweite Zeitspanne 2 und/oder die Teil-Zeitspanne 21 kann ebenfalls beispielsweise eine vorbestimmte Zeitdauer aufweisen, von beispielsweise mindestens 0,2 Sekunden, vorzugsweise maximal 2 Sekunden. Beispielsweise kann auch die zweite Zeitspanne 2 und/oder die Teil-Zeitspanne adaptiv anpassbar an einen oder mehrere Fahrparameter und/oder Umgebungsparameter ausgebildet sein.

Dabei wird während der zweiten Zeitspanne 2 die Übersetzung des Schaltsystems 10 verändert, das heißt, es wird innerhalb der zweiten Zeitspanne 2 geschalten.

Das spezielle Erhöhen des Motormoments 5 auf das Boost-Motormoment 51 und das anschließende Reduzieren auf das Schalt-Motormoment 52 bietet dabei den Vorteil, dass durch das kurzzeitige Beschleunigen des Elektrofahrrads 100 und die anschließende Wegnahme des Motordrehmoments 5 der Fahrer den Zug an der Kette verliert. Das heißt, das am Schaltsystem 10 wirkende Fahrerdrehmoment 6 wird wie in der Figur 2 zu erkennen ebenfalls auf den Wert Null reduziert. Dadurch liegt insbesondere nach der Teil-Zeitspanne 21 ein möglichst niedriges Gesamtmoment am Schaltsystem 10 vor. Im dargestellten Ausführungsbeispiel ist dieses Gesamtmoment gleich Null. Dadurch kann das Schalten innerhalb der zweiten Zeitspanne 2 besonders einfach, zeiteffizient und mit geringem Verschleiß erfolgen.

Unmittelbar nach der zweiten Zeitspanne 2 erfolgt wieder ein Erhöhen des Motormoments 5. Dabei kann vorzugsweise das Motormoment 5 direkt auf ein entsprechendes Soll-Motormoment 53 erhöht werden, welches im Normal-Fahrbetrieb des Elektrofahrrads 100 in Abhängigkeit des Fahrerdrehmoments 6 vorgesehen ist.

Alternativ bevorzugt kann, wie durch die gestrichelte Linie 5' gekennzeichnet, innerhalb einer dritten Zeitspanne 3 das Erhöhen des Motormoments 5 erneut kurzzeitig auf den Wert des Boost-Motormoments 51 erfolgen. Dadurch kann besonders vorteilhaft ein möglichst niedriger Geschwindigkeitsverlust durch das Schalten bereitgestellt werden, da ein kurzzeitiges stärkeres Beschleunigen des Elektrofahrrads 100 durch das erhöhte Motormoment 5 erzwungen wird. Zudem kann dadurch ein besonders hoher Fahrkomfort bereitgestellt werden, da der Fahrer schneller wieder den Zug an der Kette findet.

## Patentansprüche

1. Verfahren zum Betreiben eines Antriebssystems (10) eines Elektrofahrrads (100), umfassend die Schritte:
- Erhöhen eines mittels eines Motors (102) des Elektrofahrrads (100) erzeugten Motormoments (5) für eine vorbestimmte erste Zeitspanne (1),
- Reduzieren des Motormoments (5) unmittelbar nach der ersten Zeitspanne (1) für eine vorbestimmte zweite Zeitspanne (2), und
- Verändern einer Übersetzung eines Schaltsystems (12) des Antriebssystems (10) während der zweiten Zeitspanne (2).

2. Verfahren nach Anspruch 1, wobei das Erhöhen des Motormoments (5) derart erfolgt, dass das Motormoment (5) ausgehend von einem ersten Motormoment (50) auf ein Boost-Motormoment (51) erhöht wird, wobei das Boost-Motormoment (50) mindestens 120 %, bevorzugt mindestens 140 %, des ersten Motormoments (50) entspricht.

3. Verfahren nach einem der vorhergehenden Ansprüche, wobei das Reduzieren des Motormoments (5) derart erfolgt, dass das Motormoment (5) auf ein Schalt-Motormoment (52) reduziert wird, wobei das Schalt-Motormoment (52) kleiner ist als das erste Motormoment (50) vor der ersten Zeitspanne (1).

4. Verfahren nach Anspruch 3, wobei das Schalt-Motormoment (52) gleich Null ist, oder wobei das Schalt-Motormoment (52) maximal 20 %, bevorzugt maximal 10 %, des ersten Motormoments (50) oder eines Maximal-Motormoments (55) entspricht.

5. Verfahren nach einem der vorhergehenden Ansprüche, ferner umfassend den Schritt: zweites Erhöhen des Motormoments (5) nach der zweiten Zeitspanne (2).

6. Verfahren nach Anspruch 5, wobei das zweite Erhöhen des Motormoments (5) für eine vorbestimmte dritte Zeitspanne (3) auf einen Wert erfolgt, der größer als das erste Motormoment (50) vor der ersten Zeitspanne (1) ist.

7. Verfahren nach einem der vorhergehenden Ansprüche, wobei die erste Zeitspanne (1) in Abhängigkeit von ermittelten Fahrparametern und/oder Umgebungsparametern angepasst wird.

8. Verfahren nach einem der vorhergehenden Ansprüche, wobei das Erhöhen des Motormoments (5) während der ersten Zeitspanne (1) in Abhängigkeit von Fahrparametern und/oder Umgebungsparametern angepasst wird.

9. Verfahren nach Anspruch 7 oder 8, wobei die Fahrparameter und/oder Umgebungsparametern umfassen: momentane Steigung, momentane Beschleunigung, momentanes oder bevorstehendes Fahrerdrehmoment, momentane Trittfrequenz, Fahrbahneigenschaften, Fahrbahnverlauf, Navigationsdaten.

10. Verfahren nach einem der vorhergehenden Ansprüche, ferner umfassend den Schritt: Ausgeben eines akustischen und/oder optischen Hinweises über das bevorstehende Erhöhen des Motormoments (5).

11. Verfahren nach einem der vorhergehenden Ansprüche, wobei das Verändern der Übersetzung des Schaltsystems (12) mittels eines steuerbar betätigbaren Aktuators (11) durchgeführt wird.

12. Verfahren nach Anspruch 11, wobei der Aktuator (11) automatisch mittels einer Steuereinheit (105) betätigt wird, und/oder wobei der Aktuator (11) im Ansprechen auf ein manuell erzeugbares Schaltsignal betätigt wird.

13. Verfahren nach einem der vorhergehenden Ansprüche, ferner umfassend die Schritte:
- Aufzeichnen und Vergleichen von Schaltdauern des Schaltsystems (12), insbesondere während der zweiten Zeitspanne (2), und
- Ermitteln einer Funktionsfähigkeit des Schaltsystems (12), insbesondere eines Verschleißes und/oder eine Schalteinstellung, basierend auf dem Vergleich der Schaltdauern.

14. Elektrofahrrad, umfassend:
- ein Antriebssystem (10) mit einem Schaltsystem (12),
- einen Motor (102), und
- eine Steuereinheit (105), welche eingerichtet ist, das Schaltsystem (10) zu betätigen,
- wobei die Steuereinheit (5) ferner eingerichtet ist, das Verfahren nach einem der vorhergehenden Ansprüche durchzuführen.

15. Elektrofahrrad nach Anspruch 14, wobei der Motor (102) eingerichtet ist, in einem Normal-Fahrbetrieb ein vorbestimmtes Maximal-Motormoment (55) zu erzeugen, und wobei das erhöhte Boost-Motormoment (51) während der ersten Zeitspanne (1) mindestens 120 %, bevorzugt maximal 150 %, des Maximal-Motormoments (55) entspricht.
